# EUROPÄISCHE PATENTANMELDUNG

(11) **EP 3 965 270 A1**
(43) Veröffentlichungstag der Anmeldung: **09.03.2022**
(21) Anmeldenummer: 21204517.3
(22) Anmeldetag: 19.09.2014
(51) Int. Cl.: H02K 11/21, H02K 11/225, H02K 7/00, F16D 1/02, F16D 1/06, F16D 1/068, F16D 1/027, H02K 11/00

(54) **ANBAUWELLE FÜR EINEN ELEKTROMOTOR, ELEKTROMOTOR MIT EINER ANBAUWELLE, VERWENDUNG EINER ANBAUWELLE ALS ANTRIEBSWELLE EINES DREHGEBERS SOWIE VERFAHREN ZUM VERBINDEN EINER ANBAUWELLE MIT EINER MOTORWELLE EINES ELEKTROMOTORS**

(62) Teilanmeldung aus: 14185605.4
(71) Anmelder: Siemens Aktiengesellschaft, 80333 München (DE)
(72) Erfinder: Ehrmann, Michael, 72070 Tuebingen (DE)

(57) **Zusammenfassung**

Die Erfindung ist zuvorderst eine Anbauwelle (16) für einen Elektromotor (12) mit einem zum Einführen in eine Sacklochbohrung (14) in einer Motorwelle (10) des Elektromotors (12) vorgesehenen Zapfen (18), wobei der Zapfen (18) Abschnitte (30, 32, 34, 36) mit unterschiedlichen Durchmessern aufweist, welche bewirken, dass die Anbauwelle (16) koaxial mit der Motorwelle (10) ausgerichtet ist und auf den Zapfen (18) aufgetragener Klebstoff beim Fügen nicht abgestreift wird und ein definierter Klebespalt eingehalten wird, und sodann auch ein Elektromotor (12) mit einer solchen Anbauwelle (16), die Verwendung einer solchen Anbauwelle (16) als Antriebswelle eines Drehgebers (24) und ein Verfahren zum Verbinden einer solchen Anbauwelle (16) mit einer Motorwelle (10).

## Beschreibung

Die Erfindung betrifft eine Anbauwelle für einen Elektromotor. Die Erfindung betrifft im Weiteren einen Elektromotor mit einer solchen Anbauwelle, die Verwendung einer solchen Anbauwelle als Antriebswelle für einen Drehgeber, ein Lüfterrad, einen Drehgeber und ein Lüfterrad und schließlich ein Verfahren zum Verbinden einer solchen Anbauwelle mit einer Motorwelle eines Elektromotors.

Bei einem Elektromotor wird bekanntlich elektrische Energie in mechanische Energie umgewandelt und bei der Mehrzahl der Elektromotoren wird dafür eine Motorwelle in Rotation versetzt. An die Motorwelle können mittelbar oder unmittelbar Maschinen, Aggregate oder sonstige Vorrichtungen angekoppelt sein, die mittels des Elektromotors angetrieben werden.

Elektromotoren - im Folgenden mitunter kurz nur als Motoren bezeichnet - sind in unterschiedlichen Ausführungsformen an sich bekannt. Zu den Ausführungsformen gehören insbesondere eigenbelüftete Motoren und fremdbelüftete Motoren sowie Motoren mit angebauter Bremse.

Für eine Drehzahl- und/oder Lageregelung des Elektromotors ist eine Drehzahl- oder Lageerfassung mittels eines Drehgebers notwendig und die Kombination eines Drehgebers mit einem Elektromotor für solche Zwecke ist ebenfalls an sich bekannt. Der Drehgeber ist dabei mit der Motorwelle gekoppelt. Die jeweilige Ausführungsform des Motors erfordert dabei grundsätzlich unterschiedliche, über den Bereich des Rotors/Stators hinausreichende Längen der Motorwelle, um eine Ankopplung zum Beispiel eines Lüfterrads und/oder einer Bremse und jedenfalls die Ankopplung des Drehgebers zu ermöglichen. Zur Vermeidung damit einhergehender, unterschiedlicher Bauformen mit unterschiedlich langen Motorwellen ist bereits bekannt, die Motorwelle mittels einer Anbauwelle auf der zur Ankopplung des Drehgebers vorgesehenen Seite zu verlängern. Die Anbauwelle wird in axialer Richtung der Motorwelle in diese eingesteckt, nämlich indem ein dafür vorgesehener Zapfen in eine zentrierte Sacklochbohrung in die Motorwelle eingeführt und dort fixiert, insbesondere verklebt wird.

Ein Problem bei bisherigen Anbauwellen sowie deren Verbindung mit der Motorwelle besteht in der mitunter nicht optimierten Festigkeit der Verbindung zwischen der Motorwelle und der Anbauwelle und/oder der mitunter ebenfalls nicht ganz zufriedenstellenden Rundlaufgenauigkeit der Anbauwelle.

Eine Aufgabe der vorliegenden Erfindung besteht entsprechend darin, eine Anbauwelle anzugeben, die solche Nachteile vermeidet oder zumindest reduziert. Darauf basierend bestehen weitere Aufgaben der vorliegenden Erfindung darin, einen Elektromotor mit einer solchen Anbauwelle, die Verwendung einer solchen Anbauwelle als Antriebswelle eines Drehgebers sowie ein Verfahren zum Verbinden einer solchen Anbauwelle mit einer Motorwelle eines Elektromotors anzugeben.

Hinsichtlich der Anbauwelle wird diese Aufgabe mit den Merkmalen des Patentanspruchs 1 gelöst. Dabei ist bei einer Anbauwelle für einen Elektromotor, welche abschnittsweise in eine zentrierte Sacklochbohrung in einer Motorwelle des Elektromotors einführbar und dort fixierbar, insbesondere durch Verkleben fixierbar ist, Folgendes vorgesehen: Das in die Sacklochbohrung einführbare, zapfenartige Ende der Anbauwelle umfasst eine Mehrzahl von zylindrischen oder zumindest hinsichtlich ihrer Hüllkontur rotationssymmetrischen Abschnitten, die gegebenenfalls angefast sind. Die einzelnen, aufeinander folgenden Abschnitte werden zur Unterscheidung - vom freien Ende aus gesehen - als erster, zweiter, dritter und vierter Abschnitt bezeichnet. Die Durchmesser der einzelnen Abschnitte werden entsprechend der Nummerierung der Abschnitte als erster, zweiter, dritter und vierter Durchmesser bezeichnet. Bei den vier unterschiedlichen Abschnitten sind die Durchmesser des zweiten und vierten Abschnitts gleich groß. Der zweite Durchmesser entspricht also dem vierten Durchmesser. Der Durchmesser des zwischen dem zweiten und vierten Abschnitt liegenden dritten Abschnitts der Anbauwelle ist demgegenüber kleiner als der zweite oder vierte Durchmesser. Der Durchmesser des ersten Abschnitts ist zumindest kleiner als der zweite oder vierte Durchmesser, insbesondere genauso groß wie der Durchmesser im dritten Abschnitt.

Der Vorteil der Erfindung besteht darin, dass der zweite und der vierte Abschnitt (mit dem im Vergleich zum dritten Abschnitt größeren Durchmesser) zur Fixierung der Anbauwelle in der Sacklochbohrung wirksam sind. Dafür ist der zweite und vierte Durchmesser so gewählt, dass sich im eingeführten Zustand zumindest eine leichte Presspassung mit der Sacklochbohrung der Motorwelle ergibt. Die beiden durch den dritten Abschnitt voneinander getrennten Abschnitte (zweiter und vierter Abschnitt) bewirken dabei eine streng axiale Ausrichtung der Anbauwelle mit der Drehachse der Motorwelle, verhindern also eine Schiefstellung der Anbauwelle und gewährleisten eine hohe Rundlaufgenauigkeit. Zumindest der dritte Abschnitt mit dem im Vergleich zum seitlich angrenzenden zweiten und vierten Abschnitt geringeren Durchmesser kommt als Ort zum definierten Auftragen von Klebstoff oder dergleichen in Betracht. Aufgrund der seitlich angrenzenden Abschnitte (zweiter und vierter Abschnitt) mit größerem Durchmesser wird dort aufgetragener Klebstoff beim Einführen in die Sacklochbohrung nicht abgestreift. Es ist folglich sichergestellt, dass sich beim und nach dem Einführen der Anbauwelle in die Sacklochbohrung stets Klebstoff auf der Oberfläche des dritten Abschnitts befindet. Durch die Wahl einer geeigneten Differenz zwischen dem Durchmesser der umgebenden zweiten und vierten Abschnitte und dem Durchmesser des dritten Abschnitts ergibt sich eine optimal auf den jeweiligen Klebstoff optimierte Klebespaltweite.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform der Anbauwelle wird der zweite und vierte zylindrische Abschnitt mit einer Passung in Toleranzklasse IT6 oder feiner und endsprechendem Toleranzfeld (z.B. "m") durch Schleifen oder Drehen hergestellt. Durch die Auswahl einer Toleranz in der Bohrung der Motorwelle von H7 oder feiner wird in diesem Bereich eine besonders maßgenaue Passung erreicht. Dies verbessert die Rundlaufgenauigkeit.

Bei einer weiteren oder alternativen Ausführungsform der Anbauwelle ist die Oberfläche des dritten zylindrischen Abschnitts, insbesondere die Oberfläche des ersten zylindrischen Abschnitts und die Oberfläche des dritten zylindrischen Abschnitts, rauer als die Oberfläche des zweiten und vierten zylindrischen Abschnitts. Dies lässt sich zum Beispiel dadurch erreichen, dass die Oberfläche des zweiten und vierten Abschnitts geschliffen ist und die Oberfläche des dritten Abschnitts oder die Oberfläche des ersten und dritten Abschnitts gedreht ist. Durch die erhöhte Rauheit der Oberfläche des dritten Abschnitts oder des ersten und dritten Abschnitts ergeben sich eine besonders gute Benetzung mit Klebstoff und ebenso eine besonders gute Adhäsion des Klebstoffs. Dies verbessert die Festigkeit der Verbindung mit der Motorwelle.

Bei einer weiteren Ausführungsform der Anbauwelle weist diese zumindest eine insbesondere schraubenlinienförmige Entlüftungsnut in dem Bereich vom ersten zylindrischen Abschnitt bis zum vierten zylindrischen Abschnitt auf. Die oder jede Entlüftungsnut ist in der Oberfläche des in die Sacklochbohrung der Motorwelle einführbaren Teils der Anbauwelle (Zapfen) gebildet und erlaubt beim Einführen in die Sacklochbohrung ein Entweichen der dortigen Luft.

Insgesamt ist die Erfindung auch ein Elektromotor mit einer Anbauwelle der hier und im Folgenden beschriebenen Art, insbesondere ein Elektromotor, dem ein Drehgeber zugeordnet ist, wobei ein freies Ende einer solchen Anbauwelle als Antriebswelle des Drehgebers fungiert. Bei der Ausführungsform des Elektromotors, bei dem ein freies Ende der Anbauwelle als Antriebswelle des Drehgebers fungiert, wirken sich die erreichte erhöhte Festigkeit der Fügeverbindung zwischen Motorwelle und Anbauwelle sowie die erreichte erhöhte Rundlaufgenauigkeit der Anbauwelle in besonders günstiger Art und Weise aus. Aufgrund der erhöhten Festigkeit der Fügeverbindung ist die Ankopplung des Drehgebers an den Elektromotor besonders belastbar. Aufgrund der erhöhten Rundlaufgenauigkeit resultiert eine erhöhte Genauigkeit des oder jedes vom Drehgeber erhältlichen Messwerts, insbesondere eines Lage- oder Drehzahlmesswerts. Der mit dem Elektromotor gebildete Antrieb kommt dann auch für den Anbau von funktional sicheren Drehgebern in Betracht. Insoweit ist die Erfindung auch die Verwendung einer Anbauwelle der hier und im Folgenden beschriebenen Art in einem mit einer Motorwelle eines Elektromotors verbundenen Zustand als Antriebswelle eines dem Elektromotor zugeordneten Drehgebers.

Die eingangs genannte Aufgabe wird auch mit einem Verfahren zum Verbinden einer Anbauwelle der hier und im Folgenden beschriebenen Art mit einer Motorwelle eines Elektromotors gelöst. Das Verfahren umfasst die folgenden Schritte: Die Oberfläche der Anbauwelle wird zumindest im Bereich des dritten Abschnitts, insbesondere im Bereich des ersten bis vierten Abschnitts, mit einem Klebstoff versehen. Die Anbauwelle wird mit dem ersten Abschnitt voran in die Sacklochbohrung in der Motorwelle eingeführt. Dabei fixiert die Oberfläche im Bereich des zweiten und vierten Abschnitts die Anbauwelle in der Sacklochbohrung mittels einer Presspassung. Der zumindest im Bereich des dritten Abschnitts, insbesondere der im Bereich des ersten bis vierten Abschnitts oder der der im Bereich des ersten bis vierten Abschnitts sowie in der Sacklochbohrung selbst, aufgetragene Klebstoff härtet im Inneren der Sacklochbohrung aus und verbindet die Anbauwelle abschnittsweise mit der Innenoberfläche der Sacklochbohrung.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

### Es zeigen

- FIG 1: eine Motorwelle/Rotor eines Elektromotors,
- FIG 2: einen teilweise geschnittenen Ausschnitt aus der Darstellung in FIG 1 mit einer in einem Ende der Motorwelle gebildeten zentrierten Sacklochbohrung,
- FIG 3: bis
- FIG 6: unterschiedliche Ausführungsformen von Anbauwellen, die mittels eines in die Sacklochbohrung einführbaren Zapfens mit einer Motorwelle eines Elektromotors koppelbar sind,
- FIG 7: eine Schnittdarstellung eines Abschnitts eines Elektromotors mit dessen Motorwelle, einer an die Motorwelle angekoppelten Anbauwelle und mit einem Drehgeber, wobei die Anbauwelle als Antriebswelle des Drehgebers fungiert,
- FIG 8: Details zur Geometrie des zum Einführen in die Sacklochbohrung bestimmten Zapfens einer Motorwelle nach dem Stand der Technik und
- FIG 9: eine Ausführungsform des Zapfens entsprechend dem hier vorgeschlagenen Ansatz.

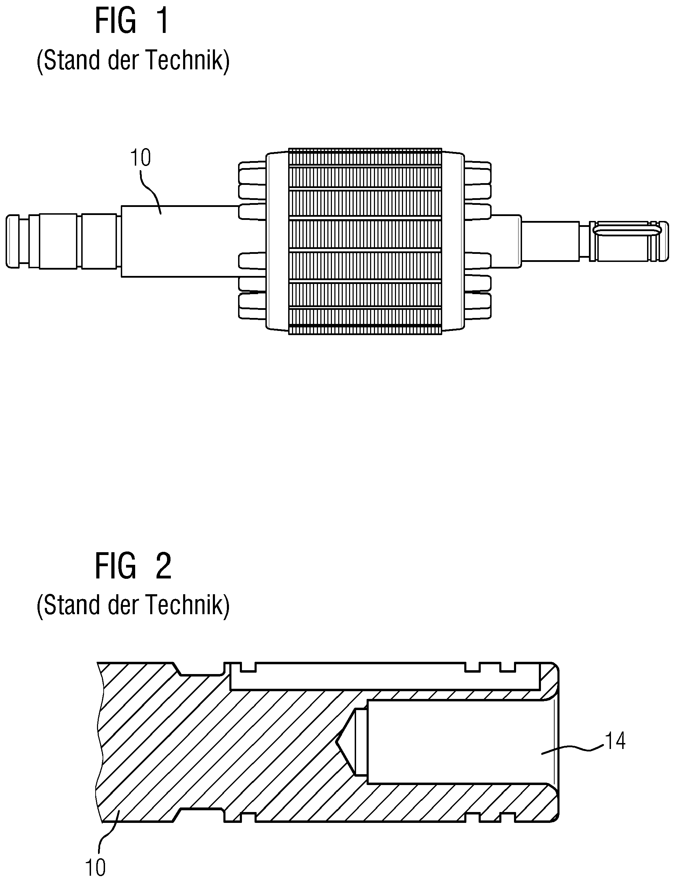

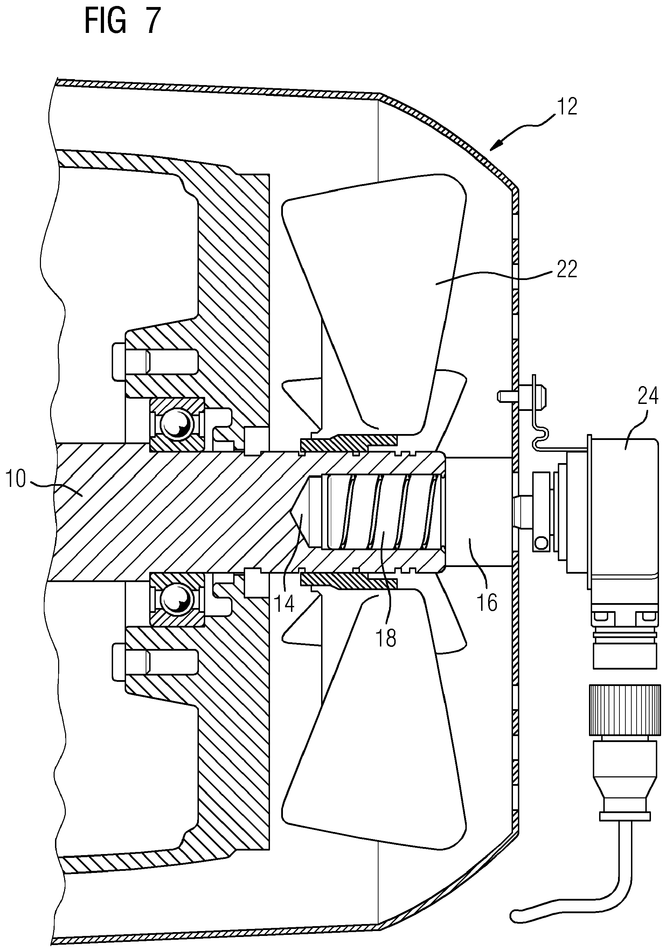

Die Darstellung in FIG 1 zeigt einen an sich bekannten Rotor sowie eine davon ausgehende Motorwelle 10 eines hier nicht dargestellten, aber ebenfalls grundsätzlich an sich bekannten Elektromotors 12 (FIG 7). Grundsätzlich kommt die Erfindung aber zur Verwendung mit jeder Art von Welle in Betracht, so dass bei jeder Erwähnung einer Motorwelle 10 auch andere Wellen mitzulesen sind. Die gezeigte Motorwelle 10 weist auf einer freien Seite eine zentrierte Sacklochbohrung 14 auf, wie dies die Schnittdarstellung des betreffenden Endes der Motorwelle 10 in der Darstellung in FIG 2 zeigt.

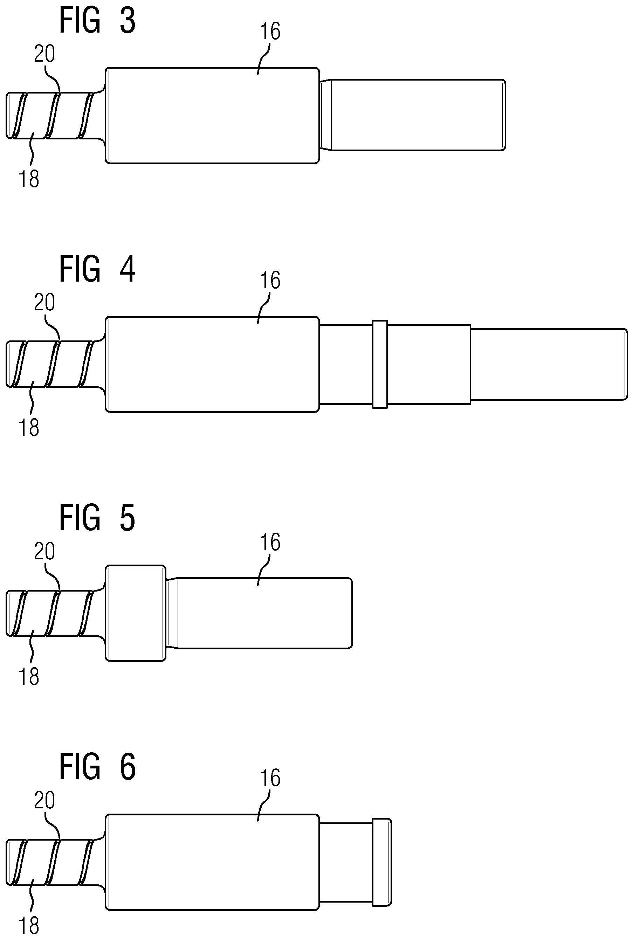

Die Darstellungen in FIG 3 bis FIG 6 zeigen unterschiedliche Anbauwellen 16, die jeweils einseitig einen zentrierten Zapfen 18 aufweisen und mittels dieses Zapfens 18 an die Motorwelle 10 eines Elektromotors 12 ankoppelbar sind, indem der Zapfen 18 in deren Sacklochbohrung 14 eingeführt wird. Um beim Einführen des Zapfens 18 in die Sacklochbohrung 14 ein Entweichen der dortigen Luft zu ermöglichen, ist in der Oberfläche des Zapfens 18 zumindest eine Entlüftungsnut 20 gebildet.

Die Darstellung in FIG 7 zeigt einen Teil eines an sich bekannten Elektromotors 12. Erkennbar sind die Motorwelle 10 und die mit der Motorwelle 10 verbundene Anbauwelle 16. Die Verbindung der Anbauwelle 16 mit der Motorwelle 10 besteht, indem der Zapfen 18 der Anbauwelle 16 in die Sacklochbohrung 14 der Motorwelle 10 eingeführt ist.

An die Motorwelle 10 ist ein Lüfterrad 22 angekoppelt. Bei dem beispielhaft dargestellten Elektromotor 12 handelt es sich folglich um einen eigenbelüfteten Motor 12. An das freie Ende der Anbauwelle 16 ist ein Drehgeber 24 angekoppelt. Anhand der Darstellung in FIG 3 bis FIG 6 wird deutlich, dass aufgrund verschiedenster Ausführungsformen der Anbauwellen 16, insbesondere aufgrund unterschiedlicher Längen solcher Anbauwellen 16, die (mittelbare) Ankopplung eines Drehgebers 24 an die Motorwelle 10 auch bei unterschiedlichen Ausführungsformen des jeweiligen Elektromotors 12 und daraus resultierender Maße (mit oder ohne Bremse, mit oder ohne Eigenbelüftung, mit oder ohne Fremdbelüftung, usw.) möglich ist.

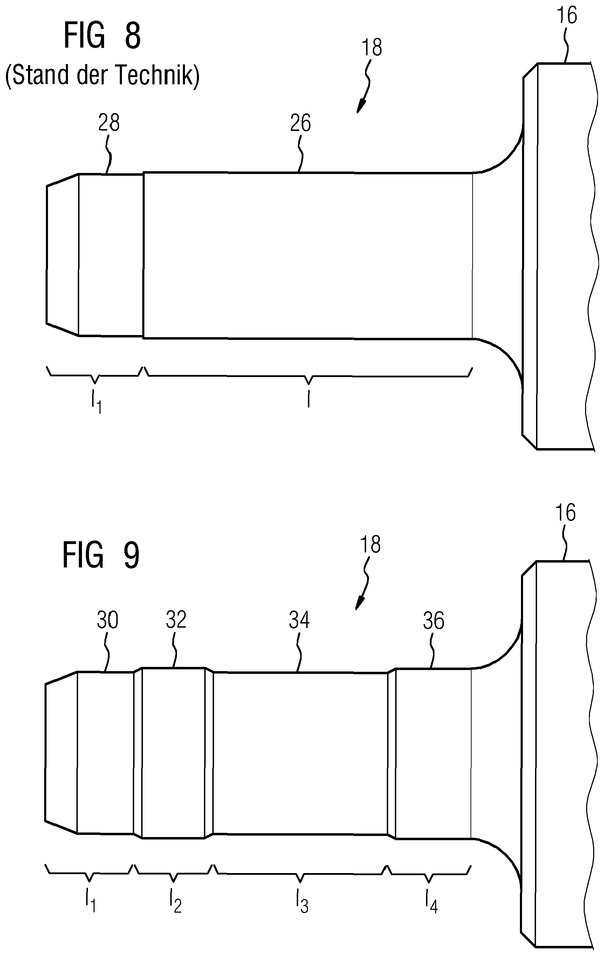

Die Darstellungen in FIG 8 und FIG 9 zeigen den Zapfen 18 ("Anbauwellenzapfen") der Anbauwelle 16 mit weiteren Details. Die Darstellung in FIG 8 zeigt eine bereits bekannte Ausführungsform des Zapfens 18. Die Darstellung in FIG 9 zeigt eine Ausführungsform des Zapfens 18 gemäß der Erfindung.

Bei der bekannten Ausführungsform (FIG 8) handelt es sich um einen Zapfen 18 mit einem zylindrischen Abschnitt 26 der Länge 1 mit einer Tolerierung z.B. j6 für eine Übergangspassung mit der Sacklochbohrung 14 mit einer Tolerierung z.B. H7. Die Oberfläche des zylindrischen Abschnitts 26 ist üblicherweise geschliffen. Vor dem zylindrischen Abschnitt 26 befindet sich noch ein angefaster, üblicherweise gedrehter Einführungsabschnitt 28 der Länge 11 mit einem geringfügig geringeren Durchmesser.

Klebstoff zum Fixieren des Zapfens 18 in der Sacklochbohrung 14 und damit zum Fixieren der Anbauwelle 16 an der Motorwelle 10 wird auf die Oberflächen der zylindrischen Abschnitte 26, 28 aufgetragen. In der Oberfläche der zylindrischen Abschnitte 26, 28 ist eine hier nicht gezeigte (siehe FIG 3 bis FIG 6), oftmals schraubenlinienförmige Entlüftungsnut 20 gebildet.

Bei der hier vorgeschlagenen und exemplarisch in FIG 9 dargestellten Ausführungsform des Zapfens 18 ("Anbauwellenzapfen") der Anbauwelle 16 fällt dessen Unterteilung in vier Abschnitte, nämlich einen ersten Abschnitt 30 mit der Länge 11 (Einführungsabschnitt), einen zweiten Abschnitt 32 mit der Länge 12, einen dritten Abschnitt 34 mit der Länge 13 und einen vierten Abschnitt 36 mit der Länge 14, auf. An die Stelle des zuvor (FIG 8) durchgehend zylindrischen Abschnitts 26 der Länge 1 treten der zweite, der dritte und der vierte Abschnitt 32, 34, 36. Die Summe der Längen 12, 13 und 14 entspricht oder entspricht zumindest im Wesentlichen der Länge 1 des zuvor durchgehend zylindrischen Abschnitts 26.

Die Besonderheit des Zapfens 18 besteht in der Wahl und der Abfolge der Durchmesser der vier Abschnitte 30-36. Der erste, oftmals angefaste Abschnitt 30 fungiert als Einführungsabschnitt und weist entsprechend einen im Vergleich zum Innendurchmesser der Sacklochbohrung 14 geringeren Durchmesser auf, also zum Beispiel einen Durchmesser mit einer Tolerierung d9 (Spielpassung), so dass der erste Abschnitt 30 leicht in die Sacklochbohrung 14 einführbar ist. Der zweite und der vierte Abschnitt 32, 36 weisen zum Beispiel einen Durchmesser mit einer Tolerierung m6 auf und fungieren damit beim in die Sacklochbohrung 14 eingeführten Zapfen 18 als Sitze und bewirken eine leichte Presspassung mit der Sacklochbohrung 14 mit einer Tolerierung H7. Die beiden voneinander beabstandeten Sitze (zweiter Abschnitt 32, vierter Abschnitt 36) gewährleisten die hohe Genauigkeit bei der axialen Ausrichtung der Anbauwelle 16 mit der Motorwelle 10 und im Ergebnis die erreichte hohe Rundlaufgenauigkeit der Anbauwelle 16. Die Oberfläche der beiden Sitze (zweiter Abschnitt 32, vierter Abschnitt 36) ist zum Beispiel geschliffen oder gedreht. Der Durchmesser des dritten Abschnitts 34 ist kleiner als die Durchmesser des zweiten und vierten Abschnitts 32, 36. Hier kommt als Durchmesser zum Beispiel ein Durchmesser mit einer Tolerierung d9 in Betracht. Zumindest in diesem Bereich, optional auch auf allen anderen Abschnitten 30-36, insbesondere auf allen anderen Abschnitten 30-36 sowie in der Sacklochbohrung 14 selbst, wird zur Fixierung des Zapfens 18 in der Sacklochbohrung 14 ein Klebstoff oder dergleichen aufgetragen. Der in Einführrichtung des Zapfens 18 in die Sacklochbohrung 14 vor dem dritten Abschnitt 34 liegende zweite Abschnitt 32 mit dem dortigen größeren Durchmesser bewirkt, dass der im dritten Abschnitt 34 aufgetragene Klebstoff beim Einführen in die Sacklochbohrung 14 nicht abgestreift wird.

Die Vorteile des hier beschriebenen Ansatzes lassen sich wie folgt zusammenfassen: Eine deutliche Erhöhung der Festigkeit der Klebeverbindung wird durch den Bereich mit reduziertem Durchmesser (dritter Abschnitt 34) zwischen den beiden Sitzen (zweiter Abschnitt 32, vierter Abschnitt 36) oder die Bereiche mit reduziertem Durchmesser (erster und dritter Abschnitt 30, 34) angrenzend an die beiden Sitze erreicht. Dort ergibt sich durch eine geeignete Wahl des jeweiligen Durchmessers eine definierte, auf den jeweiligen Klebstoff optimierte Klebespaltweite. Weil zumindest der Klebstoff im dritten Abschnitt 34 durch den beim Einführen/Fügen vorangehenden Abschnitt (zweiter Abschnitt 32) mit größerem Durchmesser gleichsam abgeschirmt wird, ist sichergestellt, dass der Klebstoff im dritten Abschnitt 34 beim Einführen/Fügen nicht abgestreift wird. Mit der geeigneten Wahl der Länge des dritten Abschnitts 34 oder der Länge des ersten und dritten Abschnitts 30, 34 ergibt sich eine optimale Größe der mit Klebstoff versehenen Kontaktfläche. Durch eine geeignete Wahl der Oberflächenstruktur in dritten Abschnitt 34 oder im ersten und im dritten Abschnitt 30, 34 ergibt sich eine optimale Benetzung durch den Klebstoff und eine ebenfalls optimale Adhäsion des Klebstoffs. In dieser Hinsicht kommt zum Beispiel eine gedrehte Oberfläche in Betracht. Die dabei resultierende Rauheit bewirkt eine solche Benetzung und Adhäsion. Ein "Auswandern"/ Herausgedrücktwerden der Anbauwelle 16 während des Aushärtens des Klebstoffs ist durch die mittels des zweiten und vierten Abschnitts 32, 36 bewirkten Presspassungen wirksam vermieden. Diese Presspassungen bewirken einen koaxialen, spielfreien Sitz der Anbauwelle 16 in der Sacklochbohrung 14 der aufnehmenden Welle, zum Beispiel einer Motorwelle 10, verhindern eine Schiefstellung der Anbauwelle 16 und gewährleisten eine hohe Rundlaufgenauigkeit der Anbauwelle 16. Zudem geschieht das Fügen, also das Einführen des Zapfens 18 in diese Sacklochbohrung 14, mit geringem Kraftaufwand, so dass ein Verbiegen der Anbauwelle 16 vermieden wird. Im Ergebnis erübrigt sich damit ein Ausrichten der Anbauwelle 16 nach dem Einbau potenziell vollständig und die Kombination mit der jeweiligen Welle, insbesondere einer Motorwelle 10 eines Elektromotors 12, kommt auch für Anwendungsfälle mit hohen Anforderungen an die Rundlaufgenauigkeit der montierten Anbauwelle 16 in Betracht.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Vorgeschlagen wird eine Anbauwelle 16 für einen Elektromotor 12 oder eine sonstige Maschine mit einem zum Einführen in eine Sacklochbohrung 14 in einer Motor- oder sonstigen Welle 10 vorgesehenen Zapfen 18, wobei der Zapfen 18 Abschnitte 30-36 mit unterschiedlichen Durchmessern aufweist, welche bewirken, dass die Anbauwelle 16 einerseits koaxial mit der Welle 10 ausgerichtet ist und andererseits auf den Zapfen 18 aufgetragener Klebstoff beim Fügen nicht abgestreift wird und ein definierter Klebespalt eingehalten wird.

## Patentansprüche

1. Anbauwelle (16) für einen Elektromotor (12), wobei die Anbauwelle (16) abschnittsweise in eine zentrierte Sacklochbohrung (14) in einer Motorwelle (10) des Elektromotors (12) einführbar und dort fixierbar ist,
wobei das in die Sacklochbohrung (14) einführbare Ende der Anbauwelle (16)
vom freien Ende aus gesehen einen ersten, gegebenenfalls angefasten zylindrischen Abschnitt (30) mit einem ersten Durchmesser, **dadurch gekennzeichnet, dass** die Anbauwelle (16) daran anschließend einen angefasten zweiten zylindrischen Abschnitt (32) mit einem zweiten Durchmesser,
daran anschließend einen dritten zylindrischen Abschnitt (34) mit einem dritten Durchmesser und wiederum
daran anschließend einen angefasten vierten zylindrischen Abschnitt (36) mit einem vierten Durchmesser aufweist,
wobei der zweite und der vierte Durchmesser gleich groß und der erste und der dritte Durchmesser kleiner als der zweite oder vierte Durchmesser sind.

2. Anbauwelle (16) nach Anspruch 1,
wobei die Oberfläche im Bereich des zweiten und vierten zylindrischen Abschnitts (32, 36) geschliffen oder gedreht ist.

3. Anbauwelle (16) nach Anspruch 1 oder 2,
wobei die Oberfläche zumindest im Bereich des dritten zylindrischen Abschnitts (34) rauer als die Oberfläche im Bereich des zweiten und vierten zylindrischen Abschnitts (32, 36) ist.

4. Anbauwelle (16) nach einem der vorangehenden Ansprüche, mit zumindest einer schraubenlinienförmigen Entlüftungsnut (20) im Bereich vom ersten zylindrischen Abschnitt (30) bis zum vierten zylindrischen Abschnitt (36).

5. Elektromotor (12) mit einer Anbauwelle (16) nach einem der vorangehenden Ansprüche.

6. Elektromotor (12) nach Anspruch 5, wobei dem Elektromotor (12) ein Drehgeber (24) zugeordnet ist und wobei ein freies Ende der Anbauwelle (16) als Antriebswelle des Drehgebers (24) fungiert.

7. Verwendung einer Anbauwelle (16) nach einem der Ansprüche 1 bis 4 in einem mit einer Motorwelle (10) eines Elektromotors (12) verbundenen Zustand als Antriebswelle eines dem Elektromotor (12) zugeordneten Drehgebers (24).

8. Verfahren zum Verbinden einer Anbauwelle (16) nach einem der Ansprüche 1 bis 4 mit einer Motorwelle (10) eines Elektromotors (12),
wobei die Oberfläche der Anbauwelle (16) zumindest im Bereich des dritten zylindrischen Abschnitts (34) mit einem Klebstoff versehen wird und
wobei die Anbauwelle (16) mit dem ersten Abschnitt (30) voran in die in der Motorwelle (10) gebildete Sacklochbohrung (14) eingeführt wird,
wobei der zweite und der vierte Abschnitt (32, 36) die Anbauwelle (16) in der Sacklochbohrung (14) mittels einer Presspassung fixieren und
wobei der zumindest im Bereich des dritten Abschnitts (34) aufgetragene Klebstoff im Inneren der Sacklochbohrung (14) aushärtet und die Anbauwelle (16) abschnittsweise mit der Innenoberfläche der Sacklochbohrung (14) verbindet.
